# EUROPÄISCHE PATENTSCHRIFT

(11) **EP 2 677 406 B1**
(45) Veröffentlichungstag und Bekanntmachung des Hinweises auf die Patenterteilung: **05.09.2018**
(21) Anmeldenummer: 12172381.1
(22) Anmeldetag: 18.06.2012
(51) Int. Cl.: G06F 3/044, H04B 5/00, H01Q 1/22, H01Q 1/24, H01Q 7/00

(54) **Baugruppe mit einer Anzeigevorrichtung und einer Nahfeldkommunikationseinheit**
Module with a display device and a near field communication unit
Module avec dispositif d'affichage et unité de communication de champ proche

(43) Veröffentlichungstag der Anmeldung: 25.12.2013
(73) Patentinhaber: Wincor Nixdorf International GmbH, 33106 Paderborn (DE)
(72) Erfinder: Beyer, Sven, 13357 Berlin (DE); Kirschke, Uwe, 13505 Berlin (DE)

(56) Entgegenhaltungen:
- US-A1- 2009 167 699
- US-A1- 2010 321 325

## Beschreibung

Die Erfindung betrifft eine Baugruppe gemäß Anspruch 1. Eine derartige Baugruppe weist eine Anzeigevorrichtung auf, die mit einer Bildschirmeinheit und einer die Anzeigefläche überlagernden, transparenten Abdeckscheibe ausgestattet ist. Die Bildschirmeinheit, beispielsweise ein Bildschirm auf Basis der LCD-Technologie, weist eine Anzeigefläche zum Anzeigen einer visuellen Information auf. Die Abdeckscheibe ist der Bildschirmeinheit vorgeschaltet und deckt die Anzeigefläche der Bildschirmeinheit schützend ab.

Derartige Anzeigevorrichtungen sind bekannt und werden heutzutage z.B. in berührungssensitiver Form beispielsweise in Computereinrichtungen (z.B. in sogenannten Tablet-PCs) oder Vorrichtungen zur Mobiltelefonie (sogenannten Smartphones) eingesetzt. Über berührungssensitive Anzeigevorrichtungen kann ein Nutzer in besonders einfacher Weise auf Informationen, die auf der Anzeigefläche dargestellt werden, reagieren und kann Eingaben vornehmen.

Zusätzlich weist die Baugruppe eine Nahfeldkommunikationseinheit als Kommunikationsschnittstelle auf. Die Nahfeldkommunikationseinheit weist eine aus Leitungsabschnitten gebildete Antenne zum Transfer elektromagnetischer Datensignale auf, wobei mittels der Antenne ein Zielbereich definiert wird, an den eine Nahfeldkommunikationsvorrichtung, z.B. eine sogenannte SmartCard, angenähert werden kann, so dass ein Datentransfer erfolgen kann, wenn die Nahfeldkommunikationsvorrichtung sich im Zielbereich der Nahfeldkommunikationseinheit befindet.
Unter "Nahfeldkommunikation" soll im Rahmen des vorliegenden Texts der unter dem englischen Begriff "Near Field Communication" (NFC) bekannte, internationale Übertragungsstandard zum kontaktlosen Austausch von Daten verstanden werden. Die NFC-Technologie wird heutzutage z.B. zur Durchführung bargeldloser Zahlungsvorgänge eingesetzt. Dabei werden z.B. kartenförmige Vorrichtungen in etwa in der Größe einer Kreditkarte (so genannte SmartCards) verwendet, die einen elektronischen Mikrochip und eine Antenne aufweisen, über die die Vorrichtung mit einer Antenne einer Nahfeldkommunikationseinheit kontaktlos kommunizieren kann.
Kontaktlose SmartCards sind z.B. im Standard ISO/IEC 14443 definiert. Zudem ist das NFC-Übertragungsprotokoll zwischen Karten und Lesegeräten im Standard ISO/IEC 7816 festgelegt. Der sogenannte "EMV"-Standard spezifiziert die Verwendung von SmartCards als Bankkarten oder Kreditkarten zur Durchführung von Zahlvorgängen. Entsprechend eines weiteren Aspekts der Erfindung ist die Baugruppe Bestandteil einer Vorrichtung zur Durchführung eines elektronischen Bezahlvorgangs gemäß Anspruch 7. Derartige Vorrichtungen sollen insbesondere dazu dienen, unter Interaktion mit beispielsweise einer SmartCard Bezahlvorgänge durchzuführen. Solche Vorrichtungen können beispielsweise als Terminals in einem Geschäft oder einem Restaurant oder in einer anderen Umgebung eingesetzt werden, in denen ein Bezahlvorgang zur Bezahlung einer Ware oder Leistung durchgeführt werden soll.
Vorrichtungen zur Durchführung eines elektronischen Bezahlvorgangs weisen herkömmlich, wenn sie zur Interaktion mit einer SmartCard unter Verwendung der Nahfeldkommunikationstechnologie zum Einsatz kommen sollen, ein Modul auf, das zusätzlich zu anderen Modulen und Bausteinen an der Vorrichtung angeordnet ist, um die Nahfeldkommunikation zu ermöglichen. Insbesondere weil eine Antenne, die zur Bereitstellung eines für die Nahfeldkommunikation geeigneten elektromagnetischen Feldes ausgelegt ist, einigen Platz benötigt und beispielsweise in ihren äußeren Abmessungen in etwa der Größe einer Kreditkarte (ca. 85 mm x 54 mm) entspricht, benötigen solche Nahfeldkommunikationsmodule erheblichen Platz, der zu einer Vergrößerung des Bauraumbedarfs solcher Terminals führt.

Weil die Antenne des Nahfeldkommunikationsmoduls ein in den EMV-Spezifikationen festgelegtes elektromagnetisches Feld in einem begrenzten Volumen erzeugen soll, das eine Kommunikation insbesondere bis zu einem Abstand von 4 cm zwischen der Antenne und einer SmartCard ermöglicht, und weil metallische Gegenstände und Bauteile das elektromagnetische Feld der Antenne beeinflussen, kann eine solche Antenne nicht an einem beliebigen Ort an einer solchen Vorrichtung angeordnet werden, so dass die Möglichkeiten für eine Integration eines Nahfeldkommunikationsmoduls beschränkt sind.

Bei einer aus der DE 10 2010 033 883 A1 bekannten, in ein Kraftfahrzeug integrierten Vorrichtung ist eine NFC-artige Schnittstelle in Form z.B. eines NFC-Chips im Bereich eines Bildschirms angeordnet, wobei die NFC-artige Schnittstelle z.B. neben dem Bildschirm platziert ist und eine Kommunikationsverbindung mit einem mobilen Gerät, z.B. einem Smartphone bereitstellt.

Aus der US 2010/0048127 A1 ist ein mobiles, kartenähnliches Gerät bekannt, das zwei Elektroden zur Kommunikation mittels kapazitiver Kopplung aufweist. Eine RFID-Antenne kann zwischen den Elektroden angeordnet sein.

Aus der US 2012/0092284 A1 ist eine Anordnung bekannt, bei der RF-Antennen in Form von Feldern an Ecken eines Bildschirms angeordnet sind derart, dass ein vor dem Bildschirm befindliches Objekt im dreidimensionalen Raum lokalisiert werden kann.

Aus der US 2009/0167699 A1 ist eine Bildschirmanordnung bekannt, bei der ein RFID-Schaltkreis mit einer schleifenförmigen Antenne in eine Berührungssensoreinheit integriert ist.

Die US 2010/0321325 A1 offenbart eine elektronische Vorrichtung, z.B. einen Computer oder ein Mobiltelefon, mit einem Touchpad, bei dem eine Antenne in einen Bildschirm integriert und dazu an einer Abdeckscheibe angeordnet ist.

Aufgabe der vorliegenden Erfindung ist es, eine Baugruppe zu schaffen, die in einfacher, vorteilhafter Weise die Integration einer Nahfeldkommunikationseinheit bei geringem zusätzlichem Bauraumbedarf ermöglicht.

Diese Aufgabe wird durch eine Baugruppe mit den Merkmalen des Anspruchs 1 gelöst.

Demnach ist zumindest ein erster Leitungsabschnitt und zumindest ein zweiter Leitungsabschnitt der Antenne der Nahfeldkommunikationseinheit zwischen der Anzeigefläche der Bildschirmeinheit und der Abdeckscheibe angeordnet derart, dass der Zielbereich die Anzeigefläche zumindest teilweise überlagert.

Gemäß der vorliegenden Erfindung ist die Antenne der Nahfeldkommunikationseinheit zumindest teilweise räumlich zwischen der Bildschirmeinheit und der die Bildschirmeinheit im Bereich der Anzeigefläche schützend überdeckenden Abdeckscheibe der Anzeigevorrichtung angeordnet. Die Bildschirmeinheit erstreckt sich mit ihrer Anzeigefläche in einer ersten Ebene und ist beispielsweise als LCD-Bildschirm zum Anzeigen visueller, veränderlicher Informationen ausgestaltet. Zum Anzeigen der visuellen Informationen strahlt die Bildschirmeinheit über ihre Anzeigefläche Licht ab. In Abstrahlrichtung der Anzeigefläche vorgeschaltet ist die transparente Abdeckscheibe, die sich in einer parallel zur ersten Ebene angeordneten, zweiten Ebene erstreckt derart, dass die Abdeckscheibe die Anzeigefläche in Lichtabstrahlrichtung zumindest teilweise überlagert.

Dadurch, dass die Antenne der Nahfeldkommunikationseinheit zumindest teilweise zwischen der Anzeigefläche der Bildschirmeinheit und der Abdeckscheibe angeordnet ist, ergibt sich eine Platz sparende Anordnung, die im Wesentlichen keinen zusätzlichen Bauraum für die Antenne der Nahfeldkommunikationseinheit erforderlich macht. Die Antenne der Nahfeldkommunikationseinheit ist hierbei als umlaufende Leiterschlaufe mit einer oder mehreren Windungen pausgebildet, die sich zwischen der Abdeckscheibe und der Anzeigefläche der Bildschirmeinheit erstrecken und in einer Ebene liegen, die parallel zur Ebene der Anzeigefläche und der Ebene der Abdeckscheibe erstreckt und zwischen diesen angeordnet ist.

Die Leiterschlaufe kann hierbei vollständig zwischen der Anzeigefläche und der Abdeckscheibe eingebettet sein. Denkbar ist aber auch, dass lediglich ein Abschnitt der Leiterschlaufe sich zwischen der Anzeigefläche und der Abdeckscheibe erstreckt und andere Abschnitte außerhalb der Anzeigefläche und/oder der Abdeckscheibe verlaufen.

Die Abdeckscheibe kann ein Schutzglas für die Bildschirmeinheit ausbilden und dazu die Anzeigefläche der Bildschirmeinheit schützend überdecken. Denkbar ist aber auch, bei berührungssensitiver Ausgestaltung der Anzeigevorrichtung, dass die Abdeckscheibe Bestandteil einer Berührungssensoreinheit mit einer die Anzeigefläche überlagernden Detektionsfläche ist. Die Detektionsfläche erstreckt sich in einer parallel zur ersten Ebene angeordneten, zweiten Ebene derart, dass die Berührungssensoreinheit mir ihrer Detektionsfläche die Anzeigefläche in Lichtabstrahlrichtung zumindest teilweise überlagert. Die Berührungssensoreinheit dient mit ihrer Detektionsfläche dazu, Berührungen eines Nutzers zu erfassen und zu lokalisieren, damit in Abhängigkeit von Berührungen Steuer- oder Eingabesignale generiert und ausgewertet werden können, um einem Nutzer eine Interaktion mit einer Vorrichtung z.B. im Rahmen der Durchführung eines elektronischen Bezahlvorgangs zu ermöglichen.

Die Berührungssensoreinheit ist zumindest in solchen Abschnitten, in denen sie die Anzeigefläche der Bildschirmeinheit überlagert, transparent ausgestaltet, so dass von der Bildschirmeinheit abgestrahltes Licht durch die Berührungssensoreinheit gelangen und ein Nutzer die auf der Anzeigefläche angezeigten Informationen erkennen kann.

Die Berührungssensoreinheit ist vorteilhafterweise als projiziert kapazitiver Touchscreen (englisch: "Projected Capacitive Touchscreen", kurz "PCT") ausgebildet. Bei einem solchen Touchscreen sind an einer transparenten, beispielsweise durch eine Glasscheibe ausgebildeten Abdeckscheibe horizontal und vertikal erstreckte Leiterbahnen zur Ausbildung eines Rasters angeordnet. Zwischen den horizontal und vertikal erstreckten Leiterbahnen werden an den Schnittpunkten der Leiterbahnen Kapazitäten gebildet, deren Wert sich bei Annäherung eines leitfähigen Gegenstands, zum Beispiel eines Fingers, ändert. Diese Kapazitätsänderung kann erfasst werden, um auf diese Weise den Ort der Annäherung des leitfähigen Gegenstandes zu lokalisieren und ein Signal abzuleiten, das zur Eingabe oder Steuerung ausgewertet wird.

Die Leiterbahnen der Berührungssensoreinheit sind im Bereich der Detektionsfläche rasterförmig an einer der Bildschirmeinheit zugewandten Seite der transparenten Abdeckscheibe angeordnet. Die Leiterbahnen können hierbei vorteilhafterweise aus Indiumzinnoxid (auch bezeichnet als "ITO") auf die Abdeckscheibe aufgedampft sein. Indiumzinnoxid ist ein halbleitender, im sichtbaren Licht weitgehend transparenter Stoff, der aufgrund der Dotierung mit Zinn eine gute elektrische Leitfähigkeit aufweist. Die Leiterbahnen sind somit an der Abdeckscheibe nicht sichtbar, so dass die Berührungssensoreinheit das von der Bildschirmeinheit abgestrahlte Licht im Wesentlichen unbeeinflusst passieren lässt.

Dadurch, dass die Antenne der Nahfeldkommunikationseinheit mit dem zumindest einen ersten Leitungsabschnitt und dem zumindest einen zweiten Leitungsabschnitt zwischen der Berührungssensoreinheit und der Bildschirmeinheit angeordnet ist und sich somit in räumlicher Nähe zu den Leiterbahnen der Berührungssensoreinheit befindet, werden auch die kapazitiven Felder der Leiterbahnen beeinträchtigt. Weil die Antenne räumlich unveränderlich zwischen der Berührungssensoreinheit und der Bildschirmeinheit festliegt und somit auch der Einfluss der Antenne auf die kapazitiven (elektrostatischen) Felder der Leiterbahnen unveränderlich ist, kann der Einfluss solcher Leitungsabschnitte, die im Bereich der Leiterbahnen der Berührungssensoreinheit verlaufen, bei der Lokalisierung einer Berührung herausgerechnet werden, um auf diese Weise eine Ungenauigkeit in der Lokalisierung einer erfassten Berührung zu vermeiden.

Durch geeignete Anordnung der Leitungsabschnitte der Antenne mit Blick auf die Leiterbahnen der Berührungssensoreinheit kann auch der Einfluss der Antenne auf die kapazitiven Felder der Leiterbahnen minimiert werden. So sind Leitungsabschnitte der Antenne, betrachtet entlang der Ebene der Abdeckscheibe, gerade mittig zwischen sich parallel erstreckenden Leiterbahnen der Berührungssensoreinheit angeordnet, so dass ein jeder Leitungsabschnitt maximal von benachbarten Leiterbahnen der Berührungssensoreinheit entfernt ist. Die Leitungsabschnitte der Antenne können sich hierbei in derselben Ebene wie die Leiterbahnen der Berührungssensoreinheit erstrecken. Die Leitungsabschnitte können aber auch in einer versetzten, parallelen Ebene zu den Leiterbahnen der Berührungssensoreinheit angeordnet sein.

Der Leitungsabschnitt der Antenne, der zwischen der Abdeckscheibe und der Bildschirmeinheit angeordnet ist, kann als Metallleitung, beispielsweise aus Kupfer, an der Abdeckscheibe befestigt sein. Dies hat den Nachteil, dass der Leitungsabschnitt auf der Bildschirmeinheit sichtbar ist, wobei die Sichtbarkeit gegebenenfalls dadurch minimiert werden kann, dass der Leitungsabschnitt gerade entlang der Linie zwischen Pixelzeilen oder Pixelspalten angeordnet ist, so dass Pixelzeilen bzw. -spalten zumindest nicht vollständig verdeckt werden. Der Leitungsabschnitt kann hierbei, analog wie die Leiterbahnen der Berührungssensoreinheit, an der der Anzeigefläche der Bildschirmeinheit zugewandten Seite der Abdeckscheibe angeordnet sein, wobei der Leitungsabschnitt in derselben Ebene wie die Leiterbahnen der Berührungssensoreinheit oder auch in einer anderen, zur Ebene der Leiterbahnen parallelen Ebene angeordnet sein kann.

Anstatt die Antenne mit metallenen Leitungsabschnitten auszubilden, kann die Antenne zumindest in solchen Leitungsabschnitten, die im Bereich der Anzeigefläche der Bildschirmeinheit angeordnet sind, auch aus transparentem Indiumzinnoxid (ITO) hergestellt und beispielsweise auf die Abdeckscheibe abgeschieden werden. Dies macht die Antenne der Nahfeldkommunikationseinheit vollständig unsichtbar, so dass die visuelle Darstellung der Informationen auf der Anzeigefläche der Bildschirmeinheit nicht beeinträchtigt ist.

Der der Erfindung zugrunde liegende Gedanke soll nachfolgend anhand der in den Figuren dargestellten Ausführungsbeispiele näher erläutert werden. Es zeigen:
- Fig. 1: eine perspektivische Ansicht einer Vorrichtung zur Durchführung eines elektronischen Bezahlvorgangs;
- Fig. 2: eine Explosionsansicht der Vorrichtung gemäß Fig. 1;
- Fig. 3: eine weitere Explosionsansicht der Vorrichtung gemäß Fig. 1;
- Fig. 4: eine schematische Darstellung der gemäß EMV-Standard vorgegebenen Abmessungen eines elektromagnetischen Feldes einer Nahfeldkommunikationseinheit;
- Fig. 5: eine Prinzipdarstellung der Kommunikation zwischen einer Nahfeldkommunikationseinheit und einer SmartCard;
- Fig. 6: eine schematische Darstellung der Anordnung einer Antenne einer Nahfeldkommunikationseinheit an einer Berührungssensoreinheit;
- Fig. 7: eine schematische Darstellung einer anderen Anordnung einer Antenne an einer Berührungssensoreinheit; und
- Fig. 8: eine schematische Schnittansicht einer Anordnung einer zwischen einer Berührungssensoreinheit und einer Bildschirmeinheit angeordneten Antenne einer Nahfeldkommunikationseinheit.

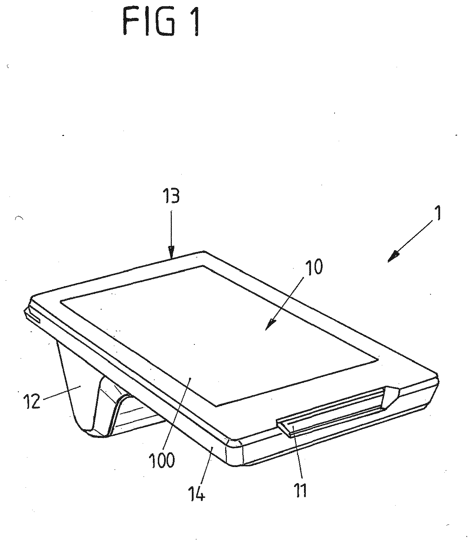

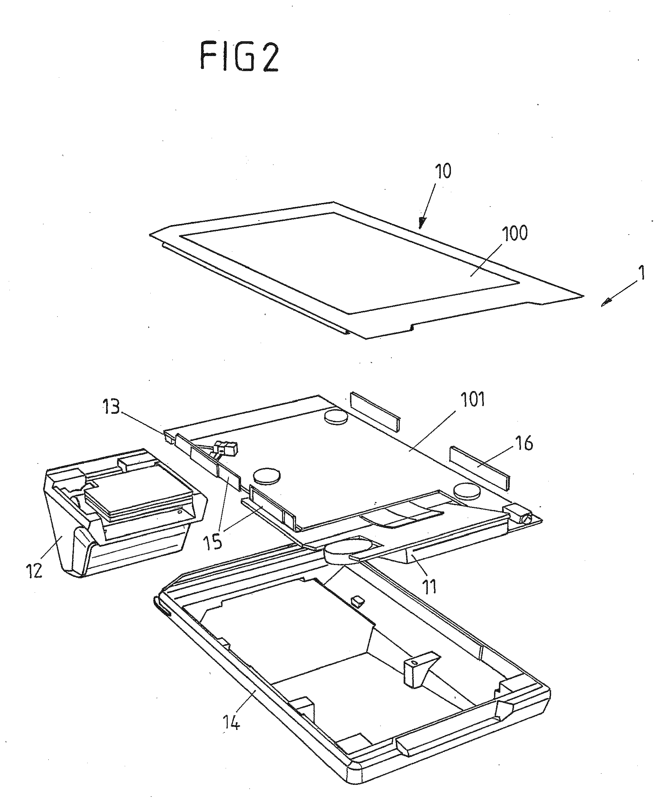

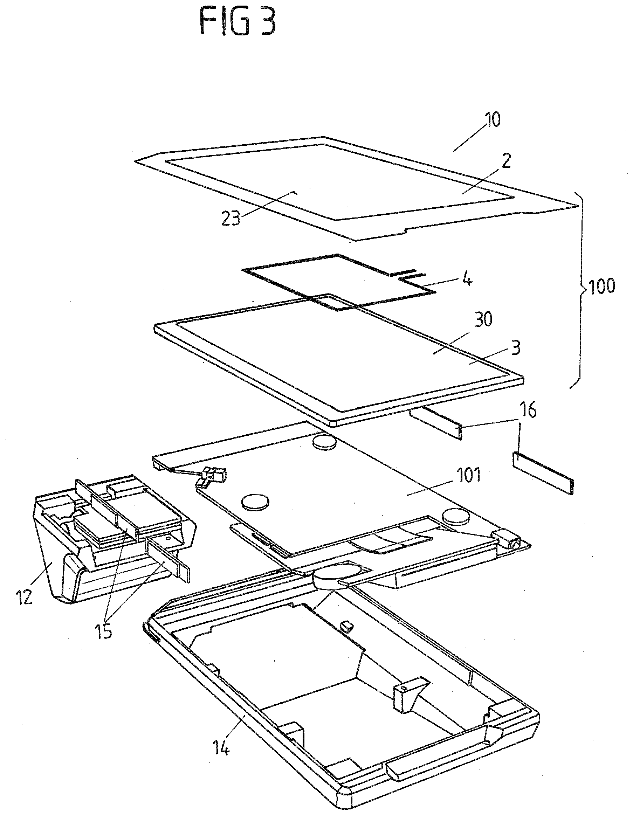

Fig. 1 bis 3 zeigen in unterschiedlichen Ansichten eine Vorrichtung zur Durchführung eines Bezahlvorgangs in Form eines Terminals 1, das beispielsweise als mobiles Gerät in einem Restaurant, im Personennahverkehr, in einem Laden oder in einer sonstigen Geschäftsumgebung eingesetzt werden kann. Das Terminal 1 weist eine Computereinrichtung 10 in Form eines sogenannten Tablet-PCs auf, bei dem eine Bildschirmeinheit 3 mit einer vergleichsweise großflächigen Anzeigefläche 30 (z.B. mit einer Bildschirmdiagonale von 7 Zoll) mit einer berührungssensitiven Berührungssensoreinheit 2 mit einer die Anzeigefläche 30 überdeckenden Detektionsfläche 23 zum Erfassen einer Berührung zusammenwirkt. Auf der Anzeigefläche 30 der Bildschirmeinheit 3 werden veränderliche visuelle Informationen, z.B. Bedienungshinweise, Eingabeaufforderungen, Bestätigungsmeldungen, Filmclips oder sonstige Informationen, angezeigt. Über die Berührungssensoreinheit 2 kann ein Nutzer mit dem Terminal 1 interagieren, beispielsweise eine Eingabe einer PIN oder dergleichen vornehmen und einen Bezahlvorgang durchführen.

Das Terminal 1 weist als weitere Komponenten neben der Computereinrichtung 10 ein Kartenlesegerät 11 z.B. für eine kontaktbasierte SmartCard, einen Drucker 12 und ein Magnetkartenlesegerät 13 auf.

Die Computereinrichtung 10 in Form des Tablet-PCs wird im Wesentlichen durch die Bildschirmeinheit 3 und die diesem in Lichtabstrahlrichtung vorgeschaltete Berührungssensoreinheit 2 sowie eine Leiterplatte 101, die auf der der Berührungssensoreinheit 2 abgewandten Seite der Bildschirmeinheit 3 angeordnet ist, gebildet. Die Komponenten der Computereinrichtung 10 sind in einem Gehäuse 14 eingefasst, an das auch der Drucker 12 angeschlossen ist.

Das Terminal 1 ist zur Kommunikation mittels Mobilfunk und drahtlosem Internet (WLAN) ausgelegt und weist dazu Mobilfunkantennen 15 für den Mobilfunk z.B. nach dem 3G-Standard sowie WLAN-Antennen 16 zur Kommunikation mit einem drahtlosen Netzwerk auf.

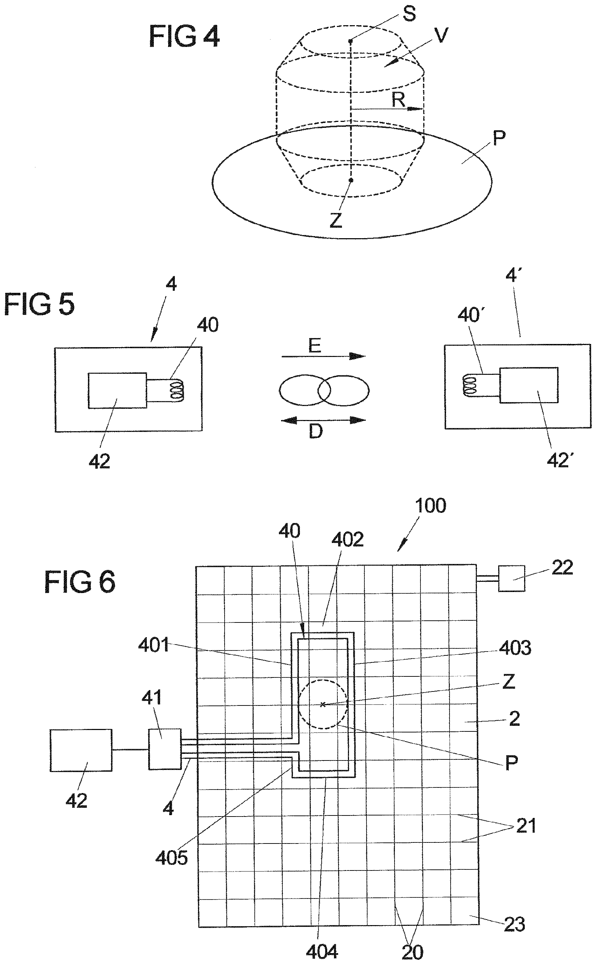

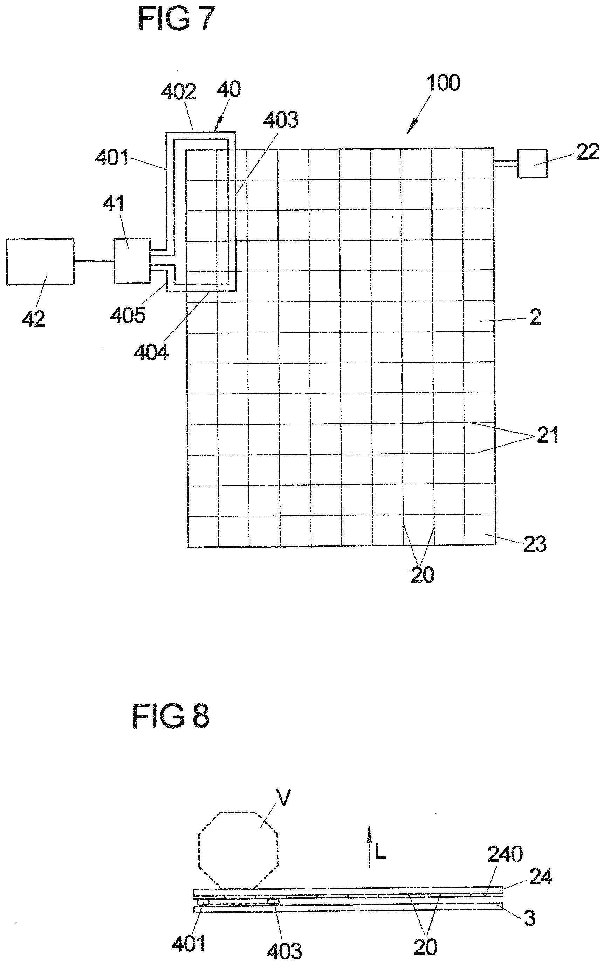

Die Berührungssensoreinheit 2 ist als projiziert kapazativer Touchscreen (engl. "Projected Capacitive Touchscreen", kurz "PCT") ausgebildet und weist, wie in Fig. 6 und 7 dargestellt, Leiterbahnen 20, 21 auf, die sich zur Ausbildung eines zweidimensionalen Rasters an einer transparenten Abdeckscheibe 24, beispielsweise einer Glasscheibe, erstrecken. Die Leiterbahnen 20, 21 sind z.B. aus Indiumzinnoxid (ITO) ausgebildet und transparent, so dass sie an der Abdeckscheibe 24 nicht sichtbar sind.

Wie aus der Schnittabsicht gemäß Fig. 8 ersichtlich, ist die Berührungssensoreinheit 2 mit der Abdeckscheibe 24 und den darin angeordneten Leiterbahnen 20, 21 der Bildschirmeinheit 3 vorgeschaltet, so dass von der Bildschirmeinheit 3 abgestrahltes Licht L die Berührungssensoreinheit 2 durchdringen kann und auf der Anzeigefläche dargestellte Informationen für einen Nutzer sichtbar sind.

Wie aus Fig. 8 ersichtlich, sind die Leiterbahnen 20, 21 an einer der Bildschirmeinheit 3 zugewandten Seite 240 der Abdeckscheibe 24 angeordnet, indem sie auf die Abdeckscheibe 24 als aus Indiumzinnoxid gebildete Bahnen abgeschieden sind.

Wie an sich bekannt, bilden die Leiterbahnen 20, 21, die in geringfügig zueinander versetzten parallelen Ebenen angeordnet sind (die Leiterbahnen 20 in einer ersten Ebene, die Leiterbahnen 21 in einer dazu versetzten zweiten Ebene), ein Raster aus, bei dem an Schnittpunkten zwischen einzelnen Leiterbahnen 20, 21 sich Kapazitäten bilden. Wird ein leitender Gegenstand an dieses Raster der Leiterbahnen 20, 21 angenähert, so verändert sich der Kapazitätswert lokal, was erfasst und ausgewertet werden kann, um auf diese Weise den Ort der Annäherung des leitenden Gegenstands zu ermitteln. Die Berührungssensoreinheit 2 ist über einen Anschluss 22 mit der Leiterplatte 101 der Computereinrichtung 1 verbunden, auf der die Auswertung erfolgt.

Zwischen der Berührungssensoreinheit 2 und der Bildschirmeinheit 3 ist eine Antenne 40 einer Nahfeldkommunikationseinheit 4 des Terminals 1 angeordnet, wie in einem ersten Ausführungsbeispiel in Fig. 6 veranschaulicht. Die Antenne 40 ist aus Leitungsabschnitten 401-405 gebildet, die sich zur Ausbildung einer geschlossenen Leiterschlaufe an der Abdeckscheibe 24 der Berührungssensoreinheit 2 erstrecken und über einen Anschluss 41 mit einem elektronischen Baustein 42 (der z.B. auf der Leiterplatte 101 angeordnet sein kann) verbunden sind.

Die Nahfeldkommunikationseinheit 4 dient zur Nahfeldkommunikation (englisch "Near Field Communication", kurz "NFC"). Über die Antenne 40 wird ein elektromagnetisches Feld erzeugt, das örtlich begrenzt ist und in etwa ein Kommunikationsvolumen V (siehe Fig. 4) überdeckt. Das Kommunikationsvolumen V ist in seinen Abmessungen von den Spezifikationen der EMV vorgegeben und weist einen Scheitelpunkt S über einem Zielbereich P (englisch "Landing Plane") von ca. 4 cm und einem Radius R um eine Verbindungslinie zwischen einem Zentrum Z des Zielbereichs P und dem Scheitelpunkt S von ca. 1,5 cm auf (selbstverständlich weist das elektromagnetische Feld nicht exakt die Gestalt des Kommunikationsvolumens V auf, sondern breitet sich gemäß den physikalischen Gesetzen aus; das Kommunikationsvolumen V, vorgeschrieben durch die EMV, definiert das Volumen, indem eine Kommunikation mit der Nahfeldkommunikationseinheit 4 im Rahmen der Nahfeldkommunikationstechnologie möglich sein soll).

Die Nahfeldkommunikation ist in Fig. 5 schematisch skizziert. Eine Nahfeldkommunikationseinheit 4 baut über eine Antenne 40 ein elektromagnetisches Feld auf, über das Energie E zur elektrischen Versorgung hin zu einer weiteren Nahfeldkommunikationsvorrichtung in Form einer SmartCard 4' gesendet wird. Die SmartCard 4' verfügt über einen elektronischen Baustein 42' in Form eines Chips, der mit einer Antenne 40' verbunden ist, über die Energie E empfangen wird und ein Datentransfer D mit der Nahfeldkommunikationseinheit 4 erfolgt.

Wie aus Fig. 6 ersichtlich, sind die Leitungsabschnitte 401-405 in etwa mittig zwischen jeweils benachbarten Leiterbahnen 20, 21 der Berührungssensoreinheit 2 angeordnet. Wie sich aus Fig. 8 ergibt, sind die Leitungsabschnitte 401-405 hierbei an der der Bildschirmeinheit 3 zugewandten Seite 240 der Abdeckscheibe 24 angeordnet, wobei die Leitungsabschnitte 401-405 sich zwischen der Abdeckscheibe 24 und der Bildschirmeinheit 3 erstrecken. Die Leitungsabschnitte 401-405 können hierbei in etwa in derselben Ebene wie die Leiterbahnen 20, 21 oder auch in einer (geringfügig) versetzten Ebene zu den Leiterbahnen 20, 21 angeordnet sein.

Die Antenne 40 in Form der Leiterschlaufe ist ausgestaltet, ein elektromagnetisches Feld mit geeigneten Abmessungen zur Bereitstellung des Kommunikationsvolumens V zu erzeugen. Die Antenne 40 kann hierbei eine oder auch mehrere Windungen aufweisen.

Die Leitungsabschnitte 401-405 der Antenne 40 können aus metallenen Leitungen, z.B. Kupferleitungen hergestellt und an der Abdeckscheibe 24 befestigt sein. Denkbar ist aber auch, die Leitungsabschnitte 401-405 aus Indiumzinnoxid und somit aus einem transparenten, leitfähigen Material herzustellen, so dass die Antenne 40 für einen Nutzer von außen nicht sichtbar ist und Licht L ungehindert von der Bildschirmeinheit 3 durch die Berührungssensoreinheit 2 treten kann.

Bei dem Ausführungsbeispiel gemäß Fig. 6 ist die Antenne 40 mit seinen eine Leiterschlaufe ausbildenden Leitungsabschnitten 401-405 vollständig im Bereich der Bildschirmeinheit 3 mit ihrer Anzeigefläche 30 angeordnet. Um hierbei eine Abschattung von abgestrahltem Licht durch die Antenne 40 weitestgehend zu vermeiden (wenn die Leitungsabschnitte 401-405 nicht aus Indiumzinnoxid ausgebildet sind), können die Leitungsabschnitte 401-405 beispielsweise exakt zwischen Pixelzeilen bzw. -spalten der Bildschirmeinheit 3 ausgebildet sein, so dass eine Abschattung von ganzen Pixelzeilen bzw. -spalten nach Möglichkeit vermieden ist.

Denkbar ist auch, wie bei dem Ausführungsbeispiel gemäß Fig. 7 dargestellt, die Antenne 40 mit ihren Leitungsabschnitten 401-405 nicht vollständig im Bereich der Anzeigefläche 30 der Bildschirmeinheit 3 anzuordnen, sondern nur einzelne Leitungsabschnitte - in dem dargestellten Ausführungsbeispiel die Leitungsabschnitte 403 und 404.

Durch die Anordnung der Antenne 40 ganz oder teilweise im Bereich der Anzeigefläche 30 der Bildschirmeinheit 3 wird der Zielbereich P zur Annäherung einer Nahfeldkommunikationsvorrichtung 4' zur Durchführung einer Nahfeldkommunikation an der Anzeigefläche 30 vorgegeben. Um mittels einer SmartCard 4' mit dem Terminal 1 zu kommunizieren, wird die SmartCard 4' der Antenne 40 angenähert und in das Kommunikationsvolumen V gebracht, so dass die Antennen 40, 40' der Nahfeldkommunikationseinheit 4 und der SmartCard 4' (siehe Fig. 5) elektromagnetisch miteinander koppeln und somit eine Kommunikation mit Energietransfer und Datenaustausch erfolgt.

Die eine Leiterschlaufe ausbildende Antenne 40 kann beispielsweise in ihren Abmessungen in etwa so groß wie eine Kreditkarte sein und somit in etwa eine Länge von 85 mm und eine Breite von 54 mm aufweisen.

Um einem Nutzer zu signalisieren, an welchen Zielbereich P eine SmartCard 4' für die Nahfeldkommunikation anzunähern ist, schreiben die EMV-Spezifikationen vor, dass im Zentrum Z des Zielbereichs P ein die Nahfeldkommunikation anzeigendes, standardisiertes Symbol abgebildet werden muss. Bei dem Terminal 1 kann dies dadurch erfolgen, dass immer dann, wenn das Terminal 1 für eine Nahfeldkommunikation bereit ist, auf der Anzeigefläche 30 im Zentrum Z des durch die Antenne 40 vorgegebenen Zielbereichs P ein entsprechendes Symbol angezeigt wird, so dass einem Nutzer erkennbar gemacht wird, in welcher Weise er eine SmartCard 4' an das Terminal 1 annähern muss.

Dadurch, dass die Abschnitte 401-405 der Antenne 40 in räumlicher Nähe zu den Leiterbahnen 20, 21 der Berührungssensoreinheit 2 zu liegen kommen, werden auch die kapazitiven Felder zwischen den rasterförmig angeordneten Leiterbahnen 20, 21 beeinflusst. Um eine nachteilige Auswirkung auf die Genauigkeit der Lokalisation einer Berührung durch die Berührungssensoreinheit 2 zu vermeiden, können diese Einflüsse der Leitungsabschnitte 401-405 auf die kapazitiven Felder der Leiterbahnen 20, 21 herausgerechnet werden, was dadurch möglich ist, dass die Lage der Leitungsabschnitte 401-405 relativ zu den Leiterbahnen 20, 21 festliegt und die elektromagnetische Einflüsse auf die statischen kapazitiven Felder der Leiterbahnen 20, 21 somit unveränderlich sind. Der Schutzumfang der Erfindung ist durch die Ansprüche festgelegt, wobei der der Erfindung zugrunde liegende Gedanke nicht auf die vorangehend beschriebenen Ausführungsbeispiele beschränkt ist, sondern sich auch bei gänzlich anders gearteten Ausführungsformen verwirklichen lässt. Insbesondere kann die Antenne der Nahfeldkommunikationseinheit auch eine andere Gestalt aufweisen. So kann die Antenne aus mehreren Windungen bestehen, die räumlich verteilt an der Berührungssensoreinheit angeordnet sein können.

Möglich ist auch, eine Antenne einer Nahfeldkommunikationseinheit der hier beschriebenen Art im Zusammenhang mit einem Bildschirm einzusetzen, der keine Berührungssensoreinheit aufweist, sondern der als der Bildschirmeinheit vorgeschaltete Abdeckscheibe ein Schutzglas trägt.

### Bezugszeichenliste

- 1: Terminal
- 10: Computereinrichtung (Tablet-PC)
- 100: Berührungssensitive Anzeigevorrichtung
- 101: Leiterplatte (Printed Circuit Board, PCB)
- 11: Kartenlesegerät
- 12: Drucker
- 13: Kartenlesegerät
- 14: Gehäuse
- 15: Mobilfunktantennen
- 16: Antennen für drahtloses Netzwerk (WLAN)
- 2: Berührungssensoreinheit
- 20, 21: Leiterbahnen
- 22: Anschluss
- 23: Detektionsfläche
- 24: Abdeckscheibe
- 240: Seite
- 3: Bildschirmeinheit
- 30: Anzeigefläche
- 4: Nahfeldkommunikationseinheit
- 4': Nahfeldkommunikationsvorrichtung (SmartCard)
- 40, 40': Antenne
- 401-405: Leitungsabschnitt
- 41: Anschluss
- 42, 42': Elektronischer Baustein
- D: Daten
- E: Energie
- L: Licht
- P: Zielbereich
- R: Radius
- S: Scheitelpunkt
- V: Kommunikationsvolumen
- Z: Zentrum

## Patentansprüche

1. Baugruppe mit
- einer berührungssensitiven Anzeigevorrichtung (100), die eine Bildschirmeinheit (3) mit einer Anzeigefläche (30) zum Anzeigen einer visuellen Information und eine die Anzeigefläche (30) überlagernde, transparente Abdeckscheibe (24) aufweist, und
- einer Nahfeldkommunikationseinheit (4), die eine aus Leitungsabschnitten (401-405) gebildete Antenne (40) zum Transfer elektromagnetischer Datensignale mit einer an einen vordefinierten Zielbereich (P) angenäherten, weiteren Nahfeldkommunikationsvorrichtung aufweist,
wobei die Antenne (40) eine umlaufende Leiterschlaufe bildet und zumindest ein erster Leitungsabschnitt (401, 403, 405) und zumindest ein zweiter Leitungsabschnitt (402, 404) der Antenne (40) der Nahfeldkommunikationseinheit (4) zwischen der Anzeigefläche (30) der Bildschirmeinheit (3) und der Abdeckscheibe (24) angeordnet ist derart, dass der Zielbereich (P) die Anzeigefläche (30) zumindest teilweise überlagert, und wobei die Abdeckscheibe (24) Bestandteil einer kapazitiven Berührungssensoreinheit (2) mit einer die Anzeigefläche (30) überlagernden Detektionsfläche (23) zum Erfassen einer Berührung ist,
**dadurch gekennzeichnet,**
**dass**, jeweils betrachtet entlang einer Ebene, in der sich die Abdeckscheibe (24) erstreckt, der zumindest eine erste Leitungsabschnitt (401, 403, 405) mittig zwischen und in Richtung von sich vertikal erstreckenden Leiterbahnen (20) der kapazitiven Berührungssensoreinheit (2) angeordnet ist, und der zumindest eine zweite Leitungsabschnitt (402, 404) mittig zwischen und in Richtung von sich horizontal erstreckenden Leiterbahnen (21) der kapazitiven Berührungssensoreinheit (2) angeordnet ist.

2. Baugruppe nach Anspruch 1, **dadurch gekennzeichnet, dass** die Berührungssensoreinheit (2) als projiziert kapazitiver Touchscreen ausgebildet ist.

3. Baugruppe nach Anspruch 1 oder 2, **dadurch gekennzeichnet, dass** die Leiterbahnen (20, 21) der Berührungssensoreinheit (2) an einer der Anzeigefläche (30) der Bildschirmeinheit (3) zugewandten Seite (240) der Abdeckscheibe (24) angeordnet sind.

4. Baugruppe nach Anspruch 3, **dadurch gekennzeichnet, dass** die Leiterbahnen (20, 21) aus Indiumzinnoxid hergestellt sind

5. Baugruppe nach einem der vorangehenden Ansprüche, **dadurch gekennzeichnet, dass** der zumindest eine erste Leitungsabschnitt (401, 403, 405) und der zumindest eine zweite Leitungsabschnitt (402, 404) der Antenne (40) an einer der Anzeigefläche (30) der Bildschirmeinheit (3) zugewandten Seite (240) der Abdeckscheibe (24) angeordnet ist.

6. Baugruppe nach einem der vorangehenden Ansprüche, **dadurch gekennzeichnet, dass** der zumindest eine erste Leitungsabschnitt (401, 403, 405) und der zumindest eine zweite Leitungsabschnitt (402, 404) der Antenne (40) aus Indiumzinnoxid hergestellt ist.

7. Vorrichtung zur Durchführung eines elektronischen Bezahlvorgangs mit einer Baugruppe nach einem der vorangehenden Ansprüche.

## Claims

1. Assembly comprising
- a touch-sensitive display apparatus (100) which has a screen unit (3) comprising a display area (30) for displaying visual information and which has a transparent covering plate (24) which overlays the display area (30), and
- a near-field communication unit (4) which has an antenna (40), which is formed from line sections (401-405), for transferring electromagnetic data signals with a further near-field communication apparatus which approximates a predefined target region (P),
wherein the antenna (40) forms a peripheral conductor loop, and at least one first line section (401, 403, 405) and at least one second line section (402, 404) of the antenna (40) of the near-field communication unit (4) are arranged between the display area (30) of the screen unit (3) and the covering plate (24) in such a way that the target region (P) at least partially overlays the display area (30), and wherein the covering plate (24) is a constituent part of a capacitive touch sensor unit (2) comprising a detection area (23), which overlays the display area (30), for detecting contact,
**characterized**
**in that**, in each case viewed along a plane in which the covering plate (24) extends, the at least one first line section (401, 403, 405) is arranged centrally between and in the direction of vertically extending conductor tracks (20) of the capacitive touch sensor unit (2), and the at least one second line section (402, 404) is arranged centrally between and in the direction of horizontally extending conductor tracks (21) of the capacitive touch sensor unit (2).

2. Assembly according to Claim 1, **characterized in that** the touch sensor unit (2) is in the form of a projected capacitive touch screen.

3. Assembly according to Claim 1 or 2, **characterized in that** the conductor tracks (20, 21) of the touch sensor unit (2) are arranged on a side (240) of the covering plate (24) which faces the display area (30) of the screen unit (3).

4. Assembly according to Claim 3, **characterized in that** the conductor tracks (20, 21) are produced from indium tin oxide.

5. Assembly according to one of the preceding claims, **characterized in that** the at least one first line section (401, 403, 405) and the at least one second line section (402, 404) of the antenna (40) are arranged on a side (240) of the covering plate (24) which faces the display area (30) of the screen unit (3).

6. Assembly according to one of the preceding claims, **characterized in that** the at least one first line section (401, 403, 405) and the at least one second line section (402, 404) of the antenna (40) are produced from indium tin oxide.

7. Apparatus for carrying out an electronic payment process comprising an assembly according to one of the preceding claims.

## Revendications

1. Module comprenant
- un dispositif d'affichage tactile (100) qui comporte une unité à écran (3) ayant une surface d'affichage (30) permettant d'afficher une information visuelle et une plaque de recouvrement transparente (24) recouvrant la surface d'affichage (30), et
- une unité de communication en champ proche (4) qui comporte une antenne (40) formée de sections de lignes (401-405) permettant de transférer des signaux de données électromagnétiques au moyen d'un autre dispositif de communication en champ proche rapproché d'une zone cible prédéfinie (P),
dans lequel l'antenne (40) forme une boucle conductrice circonférentielle et au moins une première section de ligne (401, 403, 405) et au moins une deuxième section de ligne (402, 404) de l'antenne (40) de l'unité de communication en champ proche (4) sont disposées entre la surface d'affichage (30) de l'unité à écran (3) et la plaque de recouvrement (24) de telle manière que la région cible (P) recouvre au moins partiellement la surface d'affichage (30), et dans lequel la plaque de recouvrement (24) fait partie d'une unité de détection tactile capacitive (2) comportant une surface de détection (23) superposée à la surface d'affichage (30) pour détecter un contact tactile,
**caractérisé en ce que**, lorsqu'on les observe respectivement le long d'un plan dans lequel s'étend la plaque de recouvrement (24), l'au moins une première section de ligne (401, 403, 405) est disposée au centre entre des pistes conductrices s'étendant verticalement (20) de l'unité de détection tactile capacitive (2) et dans la direction de celles-ci, et l'au moins une deuxième section de ligne (402, 404) est disposée au centre entre des pistes conductrices s'étendant horizontalement (21) de l'unité de détection tactile capacitive (2) et dans la direction de celles-ci.

2. Module selon la revendication 1, **caractérisé en ce que** l'unité de détection tactile (2) est réalisée sous la forme d'un écran tactile capacitif projeté.

3. Module selon la revendication 1 ou 2, **caractérisé en ce que** les pistes conductrices (20, 21) de l'unité de détection tactile (2) sont disposées sur une face (240) de la plaque de recouvrement (24) qui est tournée vers la surface d'affichage (30) de l'unité à écran (3).

4. Module selon la revendication 3, **caractérisé en ce que** les pistes conductrices (20, 21) sont constituées d'oxyde d'indium-étain.

5. Module selon l'une des revendications précédentes, **caractérisé en ce que** l'au moins une première section de ligne (401, 403, 405) et l'au moins une deuxième section de ligne (402, 404) de l'antenne (40) sont disposées sur une face (240) de la plaque de recouvrement (24) qui est tournée vers la surface d'affichage (30) de l'unité à écran (3) .

6. Module selon l'une des revendications précédentes, **caractérisé en ce que** l'au moins une première section de ligne (401, 403, 405) et l'au moins une deuxième section de ligne (402, 404) de l'antenne (40) sont constituées d'oxyde d'indium-étain.

7. Dispositif destiné à effectuer une opération de paiement électronique au moyen d'un module selon l'une des revendications précédentes.
